# EUROPEAN PATENT APPLICATION

(11) **EP 3 061 346 A1**
(43) Date of publication of application: **31.08.2016**
(21) Application number: 15156805.2
(22) Date of filing: 26.02.2015
(51) Int. Cl.: A01N 43/40, A01P 3/00

(54) **Use of fluopyram and biological control agents to control harmful fungi**

(71) Applicant: Bayer CropScience AG, 40789 Monheim (DE)
(72) Inventor: TAFFOREAU, Sylvain, 69004 Lyon (FR)
(74) Representative: BIP Patents

(57) **Abstract**

The present invention relates to sequential applications of fluopyram treatment blocks followed by treatment blocks of biological control agents, in particular Bacillus subtilis QST 713 in order to control fungal pathogens.

## Description

The present invention relates to the combined use of the synthetic fungicide fluopyram and biological control agents for controlling harmful fungi. To be more precise, the invention relates to a method for controlling harmful fungi, which comprises at least two treatment blocks, where in at least one treatment block the plants are treated with at least fluopyram and in at least one treatment block the plants are treated with at least one biological control agent, with the proviso that the last treatment block comprises subjecting the plants to at least one treatment with at least one biological control agent.

Synthetic fungicides are often non-specific and therefore can act on organisms other than the target fungus, including other naturally occurring beneficial organisms. Be- cause of their chemical nature, they may also be toxic and non-biodegradable. Consumers worldwide are increasingly conscious of the potential environmental and health problems associated with the residues of chemicals, particularly in food products. This has resulted in growing consumer pressure to reduce the use or at least the quantity of chemical (i.e. synthetic) pesticides. Thus, there is a need to manage food chain requirements whilst still allowing effective pest control.

A further problem arising with the use of synthetic fungicides is that the repeated and exclusive application of a fungicide often leads to selection of resistant fungi. Normally, such fungal strains are also cross-resistant against other active ingredients having the same mode of action. An effective control of the pathogens with said active compounds is then not possible anymore. However, active ingredients having new mechanisms of action are difficult and expensive to develop.

This risk of resistance development in pathogen populations as well as environmental and human health concerns have fostered interest in identifying alternatives to synthetic fungicides for managing plant diseases. The use of biological control agents (BCAs) is one such alternative. However, the effectiveness of most BCAs is not at the same high level as for conventional fungicides, especially in case of severe infection pressure.

Thus, there is an ongoing need for new methods and combinations for plant disease control. It was therefore an object of the present invention to provide a method for controlling harmful fungi which solves the problems of reducing the dosage rate of synthetic fungicides and thus the amount of residues in the crop, which reduces the risk of resistance formation and nevertheless provides sufficient disease control.

Surprisingly, these objects are achieved by a specific combination of the synthetic fungicide fluopyram and BCAs.

The present invention relates to a method for controlling harmful fungi, which method comprises subjecting plants to be protected against fungal attack to two or more sequential treatment blocks, preferably 2, 3 or 4 sequential treatment blocks, where at least one treatment block comprises subjecting the plants to at least one treatment with at least one synthetic fungicide and at least one treatment block comprises subjecting the plants to at least one treatment with at least one biological control agent, with the proviso that the last treatment block comprises subjecting the plants to at least one treatment with at least one biological control agent (and no synthetic fungicide).

Biological control is defined as the reduction of pest population by natural enemies and typically involves an active human role. The biological control of plant diseases is most often based on an antagonistic action of the BCA. There are several mechanisms by which fungicidal biocontrol is thought to work, including the production of antifungal antibiotics, competition for nutrients and rhizosphere colonization.

"Treatment block" refers to a treatment step which comprises one or more applications of either the at least one synthetic fungicide or the at least one biological control agent.
The different treatment blocks are distinguished by the type of active compounds used (one treatment block comprises the application of either the at least one synthetic fungicide or the at least one BCA) and by time (i.e. the different treatment blocks do not overlap). However, if there are more than two treatment blocks, one treatment block may comprise the combined treatment with at least one synthetic fungicide and at least one BCA, e.g. by applying a mixture of at least one synthetic fungicide and at least one BCA, with the proviso that the last treatment block comprises subjecting the plants to at least one treatment with at least one biological control agent (and no synthetic fungicide). It is however preferred that no treatment block comprises the combined treatment with at least one synthetic fungicide and at least one BCA; in other words it is preferred that each treatment block comprises the application of either the at least one synthetic fungicide or the at least one BCA.

The "last" treatment block is that treatment block which is the last fungicidal treatment block in a season, e.g. before, during or latest after harvest (treatment of the crop) or before the plant's death (in case of annual plants).

The above and the following observations made with regard to preferred features of the invention apply by themselves, but also in combination with other preferred features.
Preferably, the method of the invention comprises two treatment blocks. Thus, the invention preferably relates to a method for controlling harmful fungi, which method comprises subjecting plants to be protected against fungal attack to two sequential treat-ment blocks, where the first treatment block comprises subjecting the plants to at least one treatment with at least one synthetic fungicide and the second, subsequent treat-ment block comprises subjecting the plants to at least one treatment with at least one biological control agent.

In a treatment block which comprises subjecting the plants to at least one treatment with at least fluopyram, no BCA is applied. In a treatment block which comprises subjecting the plants to at least one treatment with at least one BCA, no synthetic fungicide is applied.

In the method of the invention, a treatment block is carried out only after the preceding treatment block has been finished, i.e. the second treatment block is carried out only after the first treatment block has been finished, the third treatment block, if existent, is carried out only after the second treatment block has been finished, etc.

Preferably, the respective treatment blocks are carried out during different growth stages of the plants. In other words, the time interval between the subsequent treatment blocks is preferably such that the plants are in different growth stages when being subjected to the respective treatment blocks, i.e. the first, the second, etc. treatment blocks are carried out during non-overlapping growth stages of the plants, the first treatment block of course being carried out at earlier growth stages than the second, etc. In case of the preferred embodiment of the invention in which the method com- prises two treatment blocks, preferably the time interval between the first and the sec- ond treatment block is such that the plants are in different growth stages when being subjected to the first and the second treatment blocks, respectively, i.e. the first and the second treatment blocks are preferably carried out during non-overlapping growth stages of the plants, the first treatment block of course being carried out at earlier growth stages.

"Growth stage", as used in the terms of the present invention, refers to growth stages according to the BBCH extended scale (BBCH Makrostadien; Biologische Bundesan- stalt fOr Land- und Forstwirtschaft [BBCH Macrostages; German Federal Biological Research Center for Agriculture and Forestry]; see www.bba.de/veroeff/bbch/bbcheng.pdf).

Preferably, the first treatment block ends latest when the plants have reached growth stage 81 and the last treatment block begins earliest when the plants are in growth stage 41. As already pointed out, a subsequent block is always and mandatorily carried out after completion of the preceding block; which means for example that if the first treatment block has finished when the plant is in growth stage 81, the second treatment block is carried out only after the completion of the first block, preferably earliest in growth stage 82. The most suitable point of time for the treatment depends, inter alia, from the plant to be treated.

In case of the preferred embodiment of the invention in which the method comprises two treatment blocks, preferably the first treatment block ends latest when the plants have reached growth stage 81 and the second treatment block begins earliest when the plants are in growth stage 41. As already pointed out, the second block is always and mandatorily carried out after completion of the first block; which means for example, that if the first treatment block has finished when the plant is in growth stage 81, the second treatment block is carried out only after the completion of the first block, preferably earliest in growth stage 82. The most suitable point of time for the treatment depends, inter alia, from the plant to be treated.

More preferably, the first treatment block ends latest when the plants have reached growth stage 79 and the last treatment block, which is preferably the second treatment block, begins earliest when the plants are in growth stage 41. Even more preferably, the first treatment block is carried out when the plants are in the growth stage 01 to 79, preferably 10 to 79 and the last treatment block, which is preferably the second treatment block, is carried out when the plants are in the growth stage 41 to 92 or even after harvest, i.e. 41 to 99. The most suitable point of time for the treatment depends, inter alia, from the plant to be treated. More detailed information is given below with respect to specific plants.

In the following, specific plants and the respectively preferred time interval for the preferred two treatment blocks are compiled by way of example:

| Plant | 1st treatment block (syn- | 2nd treatment block (BCA) |
|---|---|---|
| grape | finished latest in GS 81, preferably latest in GS 75; preferably 19 - 75 | starting earliest in GS 65, e.g. 65 through harvest period (89 - 92) |
| potatoes, vegetables with long vegetation period¹ | finished latest in GS 69; preferably 12 - 69 | starting earliest in GS 69, e.g. 69 through harvest period (89- 92) |
| pomefruit, stonefruit, tree nuts | finished latest in GS 69; preferably 01 - 69 | starting earliest in GS 69, e.g. 69 through harvest period (89 - 92) |
| strawberry | finished latest in GS 69; preferably 55 - 69 | starting earliest in GS 71 and continuing during harvest period |

| | | |
|---|---|---|
| * GS=growth stage | | |

For example tomatoes, cucumbers, peppers, beans

In a specific embodiment, all treatment blocks which comprise the treatment with at least one synthetic fungicide end latest at the end of the vegetative period of the respective plant. In other words, in this specific embodiment no synthetic fungicide is used for treating the plants after the end of the vegetative period. In this specific embodiment the treatment step with the at least one BCA is carried out after the vegetative period in the pre-harvest period.

In the treatment block in which the at least one synthetic fungicide is used, this is applied at least once, for example 1, 2, 3, 4, 5, 6, 7 or 8 times, preferably 1, 2, 3, 4 or 5 times. The application frequency depends, inter alia, on the pathogen pressure and/or on climatic conditions. For instance, weather conditions which promote fungal attack and proliferation, such as extreme wetness, might require more applications of the at least one synthetic fungicide than dry and hot weather. If there is more than one application of the synthetic fungicides, the time interval between the single applications de- pends, inter alia, on the pest pressure, the plant to be treated, weather conditions and can be determined by the skilled person. In general, the application frequency as well as the application rates will correspond to what is customary for the respective plant and the respective fungicide under the given conditions, with the exception that after a specific growth stage the treatment with the synthetic fungicide is replaced by a treatment with a BCA. If there is more than one application of the at least one synthetic fungicide, these may be carried out during different growth stages.

In the method of the invention, depending on the type of synthetic fungicide used, the single application rates of the at least one fungicide are from 0.0001 to 7 kg per ha, preferably from 0.005 to 5 kg per ha, more preferably from 0.05 to 2 kg per ha.

In the treatment block in which the at least one BCA is used, this is applied at least once, for example 1, 2, 3, 4, 5, 6, 7 or 8 times, preferably 1, 2, 3, 4, 5 or 6 times, more preferably 1, 2, 3 or 4 times, even more preferably 2, 3 or 4 times and in particular 2 or 3 times. Like in the case of the application of synthetic fungicides, the application frequency depends, inter alia, on the pathogen pressure and/or on climatic conditions. For instance, weather conditions which promote fungal attack and proliferation, such as extreme wetness, might require more applications of the BCA than dry and hot weather. If there is more than one application of the BCA, the time interval between the single applications depends, inter alia, on the pest pressure, the plant to be treated, weather conditions etc., and can be determined by the skilled person. In general, the application frequency as well as the application rates will correspond to what is customary for the respective plant and the respective BCA under the given conditions, with the exception that the treatment with the BCA starts only after the plant has reached a specific growth stage and after the treatment with a synthetic fungicide has been completed. If there is more than one application of the BCA, these may be carried out during different growth stages.

Preferably the synthetic fungicide is fluopyram.

The biological control agent is preferably selected from Bacillus subtilis and Bacillus pumilus.

Suitable B. subtilis strains are for example FZB13, FZB14, FZB24, FZB37, FZB38, FZB40, FZB42, FZB44, FZB45, FZB47 from FZB Biotechnik GmbH, Berlin, Germany, Cot1, CL27 and QST713 from Bayer CropScience.

A suitable and preferred strain for B. pumilus is the QST 2808 which is available as the commercial product Sonata®) from Bayer CropScience.

Among these, preference is given to strain QST713, which is available as the commercial product Serenade® from Bayer CropScience.

The most preferred biological control agent is Bacillus subtilis strain QST713, which is available as the commercial product Serenade® from Bayer CropScience.

The most preferred combination of a synthetic fungicide with a biological control agent according to the invention is the treatment with fluopyram followed by Bacillus subtilis strain QST713, which is available as the commercial product Serenade® from Bayer CropScience.

The above-mentioned metabolites produced by the non-pathogenic bacteria include antibiotics, enzymes, siderophores and growth promoting agents, for example zwitter- micin-A, kanosamine, polyoxine, enzymes, such as a-amylase, chitinases, and pektinases, phytohormones and precursors thereof, such as auxines, gibberellin-like substances, cytokinin-like compounds, lipopeptides such as iturins, plipastatins or surfac- tins, e.g. agrastatin A, bacillomycin D, bacilysin, difficidin, macrolactin, fengycin, bacilysin and bacilaene. Preferred metabolites are the above-listed lipopeptides, in particular produced by B. subtilis and specifically B. subtilis strain QST713.

Preferred are metabolites of B. subtilis strain QST713, in particular those iturins, plipastatins, and surfactins present in the commercial product Serenade® from Bayer CropScience.

For the use according to the present invention, the synthetic fungicide can be converted into the customary types of agrochemical formulations, for example solutions, emulsions, suspensions, dusts, powders, pastes and granules. The composition type depends on the particular intended purpose; in each case, it should ensure a fine and uniform distribution of the active compound.

Examples for composition types are suspensions (SC, OO, FS), emulsifiable concen- trates (EC), emulsions (EW, EO, ES), pastes, pastilles, wettable powders or dusts (WP, SP, SS, WS, OP, OS) or granules (GR, FG, GG, MG), which can be water- soluble or wettable, as well as gel formulations for the treatment of plant propagation materials such as seeds (GF).
Usually the composition types (e. g. SC, OO, FS, EC, WG, SG, WP, SP, SS, WS, GF) are employed diluted. Composition types such as OP, OS, GR, FG, GG and the compositions are prepared in a known manner (cf. US 3,060,084, EP-A 707 445 (for liquid concentrates), Browning: "Agglomeration", Chemical Engineering, Dec. 4, 1967, 147-48, Perry's Chemical Engineer's Handbook, 4th Ed., McGraw-Hill, New York, 1963, pp. 8-57 et seq., WO 91/13546, US 4,172,714, US 4,144,050, US 3,920,442, US 5,180,587, US 5,232,701, US 5,208,030, GB 2,095,558, US 3,299,566, Klingman: Weed Control as a Science (J. Wiley & Sons, New York, 1961), Hance et al.: Weed Control Handbook (8th Ed., Blackwell Scientific, Oxford,1989) and Mollet, H. and Grubemann, A.: Formulation technology (Wiley VCH Verlag, Weinheim, 2001), for example by extending the active compounds with solvents and/or carriers, if desired using emulsifiers and dispersants.

The agrochemical compositions may also comprise auxiliaries which are customary in agrochemical compositions. The auxiliaries used depend on the particular application form and active substance, respectively.
Examples for suitable auxiliaries are solvents, solid carriers, dispersants or emulsifiers (such as further solubilizers, protective colloids, surfactants, spreaders and adhesion agents), organic and anorganic thickeners, bactericides, anti-freezing agents, anti- foaming agents, if appropriate colorants and tackifiers or binders (e. g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene,
xylene, paraffin, tetrahydronaphthalene, alkylated naphthalenes or their derivatives, alcohols such as methanol, ethanol, propanol, butanol and cyclohexanol, glycols, ke- tones such as cyclohexanone and gamma-butyrolactone, fatty acid dimethylamides, fatty acids and fatty acid esters and strongly polar solvents, e. g. amines such as N-methylpyrrolidone.
Solid carriers are mineral earths such as silicates, silica gels, talc, kaolins, limestone, lime, chalk, bole, loess, clays, dolomite, diatomaceous earth, calcium sulfate, magne- sium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wetters, tackifiers, dispersants or emulsifiers) are alkali metal, alkaline earth metal and ammonium salts of aromatic sulfonic acids, such as ligninsoulfonic acid (Borresperse® types, Borregard, Norway) phenolsulfonic acid, naphthalenesulfonic acid (Morwet® types, Akzo Nobel, U.S.A.), dibutylnaphthalene- sulfonic acid (Nekal® types, BASF, Germany),and fatty acids, alkylsulfonates, alkyl- arylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearyl- phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol® types, Clariant, Switzer- land), polycarboxylates (Sokolan® types, BASF, Germany), polyalkoxylates, polyvinylamines (Lupasol® types, BASF, Germany), polyvinylpyrrolidone and the copolymers thereof. Suitable spreaders (compounds which reduce the surface tension of aqueous compositions and improve the penetration through cuticular layers, thus increasing the uptake of crop protection agents by plants) are for example trisiloxane surfactants such as polyether/polymethylsiloxan copolymers (Break thru® products from Evonik Industries, Germany).

Examples for thickeners (i. e. compounds that impart a modified flowability to compositions, i.e. high viscosity under static conditions and low viscosity during agitation) are polysaccharides and organic and anorganic clays such as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, USA).

Bactericides may be added for preservation and stabilization of the composition. Ex- amples for suitable bactericides are those based on dichlorophene and benzylalcohol hemi formal (Proxel® from ICI or Acticide® RS from Thor Chemie and Kathan® MK from Rohm & Haas) and isothiazolinone derivatives such as alkylisothiazolinones and benzisothiazolinones (Acticide® MBS from Thor Chemie).

Examples for suitable anti-freezing agents are ethylene glycol, propylene glycol, urea and glycerin. Examples for anti-foaming agents are silicone emulsions (such as e. g. Silikon® SRE, Wacker, Germany or Rhodorsil®, Rhodia, France), long chain alcohols, fatty acids, salts of fatty acids, fluoroorganic compounds and mixtures thereof.

Suitable colorants are pigments of low water solubility and water-soluble dyes. Exam- ples to be mentioned are rhodamin B, C. I. pigment red 112, C. I. solvent red 1, pig- ment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples for tackifiers or binders are polyvinylpyrrolidons, polyvinylacetates, polyvinyl alcohols and cellulose ethers (Tylose®, Shin-Etsu, Japan).

Powders, materials for spreading and dusts can be prepared by mixing or concomitantly grinding the active compounds and, if appropriate, further active substances, with at least one solid carrier. Granules, e. g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

The following are examples of formulations:
1.Products for dilution with water
   For seed treatment purposes, such products may be applied to the seed diluted or undiluted.
   A Water-soluble concentrates (SL, LS)
      10 parts by weight of the active compounds are dissolved in 90 parts by weight of water or a water-soluble solvent. As an alternative, wetting agents or other auxiliaries are added. The active compound dissolves upon dilution with water. A formulation having an active compound content of 10% by weight is obtained in this manner.
   B Dispersible concentrates (DC)
      20 parts by weight of the active compounds are dissolved in 70 parts by weight of cyclohexanone with addition of 10 parts by weight of a dispersant, for example polyvinylpyrrolidone. Dilution with water gives a dispersion. The active compound content is 20% by weight.
   c Emulsifiable concentrates (EC)
      15 parts by weight of the active compounds are dissolved in 75 parts by weight of xylene with addition of calcium dodecylbenzenesulfonate and castor oil ethoxylate (in each case 5 parts by weight). Dilution with water gives an emulsion. The formulation has an active compound content of 15% by weight.
   D Emulsions (EW, EO, ES)
      25 parts by weight of the active compounds are dissolved in 35 parts by weight of xylene with addition of calcium dodecylbenzenesulfonate and castor oil ethoxylate (in each case 5 parts by weight). This mixture is introduced into 30 parts by weight of water by means of an emulsifying machine (e.g. Ultraturrax) and made into a homogeneous emulsion. Dilution with water gives an emulsion. The formulation has an active compound content of 25% by weight.
   E Suspensions (SC, OD, FS)
      In an agitated ball mill, 20 parts by weight of the active compounds are comminuted with addition of 10 parts by weight of dispersants and wetting agents and 70 parts by weight of water or an organic solvent to give a fine active compound suspension. Dilu- tion with water gives a stable suspension of the active compound. The active com- pound content in the formulation is 20% by weight.
   F Water-dispersible granules, water-soluble granules (WG, SG)
      50 parts by weight of the active compounds are ground finely with addition of 50 parts by weight of dispersants and wetting agents and prepared as water-dispersible or water-soluble granules by means of technical appliances (for example extrusion, spraytower, fluidized bed). Dilution with water gives a stable dispersion or solution of the active compound. The formulation has an active compound content of 50% by weight.
   G Water-dispersible powders and water-soluble powders (WP, SP, SS, WS) 75 parts by weight of the active compounds are ground in a rotor-stator mill with addition of 25 parts by weight of dispersants and wetting agents as well as silica gel. Dilution with water gives a stable dispersion or solution of the active compound. The active compound content of the formulation is 75% by weight.
   H Gel (GF)
      In an agitated ball mill, 20 parts by weight of the active compounds are comminuted with addition of 10 parts by weight of dispersants, 1 part by weight of gelling agent wet- ters and 70 parts by weight of water or an organic solvent to give a fine suspension of the active compounds. Dilution with water gives a stable suspension of the active compounds having an active compound content of 20% by weight.
   I. Products to be applied undiluted dustable powders (DP,OS)
      5 parts by weight of the active compounds are ground finely and mixed intimately with 95 parts by weight of finely divided kaolin. This gives a dustable product having an active compound content of 5% by weight.
   J Granules (GR, FG, GG, MG)
      0.5 parts by weight of the active compounds is ground finely and associated with 99.5 parts by weight of carriers. Current methods are extrusion, spray-drying or the fluidized bed. This gives granules to be applied undiluted having an active compound content of 0.5% by weight.
   K ULV solutions (UL)
      10 parts by weight of the active compounds are dissolved in 90 parts by weight of an organic solvent, for example xylene. This gives a product to be applied undiluted having an active compound content of 10% by weight.

In general, the formulations (agrochemical compositions) comprise from 0.01 to 95% by weight, preferably from 0.1 to 90% by weight and more preferably from 0.5 to 90% by weight, of the active compounds. The active compounds are employed in a purity of from 90% to 100%, preferably 95% to 100% (according to NMR spectrum).

Water-soluble concentrates (LS), flowable concentrates (FS), powders for dry treat- ment (OS), water-dispersible powders for slurry treatment (WS), water-soluble powders (SS), emulsions (ES) emulsifiable concentrates (EC) and gels (GF) are usually employed for the purposes of treatment of plant propagation materials, particularly seeds. These formulations can be applied to plant propagation materials, particularly seeds, diluted or undiluted. The formulations in question give, after two-to-tenfold dilution, active substance concentrations of from 0.01 to 60% by weight, preferably from 0.1 to 40% by weight, in the ready-to-use preparations. Application can be carried out before or during sowing. Methods for applying or treating with agrochemical compounds and compositions thereof, respectively, on to plant propagation material, especially seeds, are known in the art, and include dressing, coating, pelleting, dusting, soaking and in- furrow application methods of the propagation material. In a preferred embodiment, the active compounds or the compositions thereof, respectively, are applied on to the plant propagation material by a method such that germination is not induced, e. g. by seed dressing, pelleting, coating and dusting.

In a preferred embodiment, a suspension-type (FS) formulation is used for seed treatment. Typically, a FS formulation may comprise 1-800 g/l of active substance, 1-200 g/l surfactant, 0 to 200 g/l antifreezing agent, 0 to 400 g/l of binder, 0 to 200 g/l of a pigment and up to 1 liter of a solvent, preferably water.

The at least one synthetic fungicide can be used as such, in the form of its formulations (agrochemical compositions) or the use forms prepared therefrom, for example in the form of directly sprayable solutions, powders, suspensions, dispersions, emulsions, oil dispersions, pastes, dustable products, materials for spreading, or granules, by means of spraying, atomizing, fogging, dusting, spreading, brushing, immersing or pouring. The application forms depend entirely on the intended purposes; the intention is to en- sure in each case the finest possible distribution of the active compounds used according to the invention.
Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active sub- stance, wetter, tackifier, dispersant or emulsifier and, if appropriate, solvent or oil, and such concentrates are suitable for dilution with water.

The active compound concentrations in the ready-to-use preparations can be varied within relatively wide ranges. In general, they are from 0.0001 to 10%, preferably from 0.001 to 1%.
The active compounds may also be used successfully in the ultra-low-volume process (ULV), it being possible to apply formulations (compositions) comprising over 95% by weight of active compound, or even to apply the active compounds without additives.

Also the BCAs can be converted into the customary types of agrochemical formula- tions, for example solutions, emulsions, suspensions, dusts, powders, pastes and granules. Preferably, they are used in the form of aqueous or alcoholic extracts.

The method of the invention is generally carried out by bringing the plant to be treated, parts of plant, the harvested crops, the locus where the plant is growing or is intended to grow and/or its propagules in contact with the active compounds (synthetic fungi- cide(s) or BCA(s)). To this end, the active components are applied to the plant, parts of plant, the harvested crops, the locus where the plant is growing or is intended to grow and/or its propagules.
The term "propagules" represents all types of plant propagation material from which a complete plant can be grown, such as seeds, grains, fruits, tubers, the rhizome, spores, cuttings, slips, meristem tissue, individual plant cells and any form of plant tis- sue from which a complete plant can be grown. Preferably, it takes the form of seeds.

"Locus" refers to any type of substrate in which the plant grows or will grow, such as soil (for example in a pot, in borders or in the field) or artificial media. As a rule, it takes the form of the soil.

For treating the propagules, in particular the seed, it is possible in principle to use any customary methods for treating or dressing seed, such as, but not limited to, seed dressing, seed coating, seed dusting, seed soaking, seed film coating, seed multilayer coating, seed encrusting, seed dripping, and seed pelleting. Specifically, the treatment is carried out by mixing the seed with the particular amount desired of seed dressing formulations either as such or after prior dilution with water in an apparatus suitable for this purpose, for example a mixing apparatus for solid or solid/liquid mixing partners, until the composition is distributed uniformly on the seed. If appropriate, this is followed by a drying operation.

Treatment of the propagules is in general only suitable for seasonal, in particular annual plants, i.e. for plants which are completely harvested after one season and which have to be replanted for the next season. For treating the locus where the plant is growing or intended to grow, especially the soil, the latter may be treated by applying to the soil a suitable amount of the respective active compound either as such or after prior dilution with water.

In case the plants or (overground) parts thereof are to be treated, this is preferably done by spraying the plant or parts thereof, preferably their leaves (foliar application). Here, application can be carried out, for example, by customary spray techniques using spray liquor amounts of from about 100 to 1000 l/ha (for example from 300 to 400 l/ha) using water as carrier. Application of the active compounds by the low-volume and ultra-low-volume method is possible, as is their application in the form of microgranules.

Another suitable application method for treating the plants or (overground) parts thereof is fog application. The latter applies to the treatment of harvested crops, too. Moreover, dusting is also possible.

If the treatment of the invention comprises the treatment of the propagules, this is preferably carried out only during the first treatment block. If the treatment of the invention comprises the treatment of the harvested crops, this is preferably carried out only during the last treatment block.

The treatments in the method according to the invention with the at least one synthetic fungicide and the at least one BCA is preferably carried out in the form of foliar treat- ment and/or soil treatment and more preferably as foliar treatment of the plants.
The plants to be treated are preferably cultivated plants, especially agricultural or ornamental plants. Preferably, the plants are selected from grape, pome fruit, stone fruit, citrus fruit, tropical fruit, such as banana, mango and papaya, strawberry, blueberry, almond, cucurbit, pumpkin/squash, cucumber, melon, watermelon, kale, cabbage, Chinese cabbage, lettuce, endive, asparagus, carrot, celeriac, kohlrabi, chicory, radish, swede, scorzone- rea, Brussels sprout, cauliflower, broccoli, onion, leek, garlic, shallot, tomato, potato, paprika (pepper), sugar beet, fodder beet, lentil, vegetable pea, fodder pea, bean, alfalfa (lucerne), soybeans, oilseed rape, mustard, sunflower, groundnut (peanut), maize (corn), wheat, triticale, rye, barley, oats, millet/sorghum, rice, cotton, flax, hemp, jute, spinach, sugar cane, tobacco and ornamental plants.
Specifically, the plants are selected from grape, pome fruit, stone fruit, cucurbit, melon, cabbage, tomato, paprika (pepper), sugar beet, bean, cucumber, lettuce and carrot. In a very specific embodiment, the plant to be treated is grape (vine).

The term "cultivated plants" is to be understood as including plants which have been modified by breeding, mutagenesis or genetic engineering including but not limiting to agricultural biotech products on the market or in development (cf. http://www.bio.org/speeches/pubs/er/agri_roducts.asp). Genetically modified plants are plants whose genetic material has been modified by the use of recombinant DNA techniques in such a way that under natural circumstances they cannot readily be obtained by cross breeding, mutations or natural recombination. Typically, one or more genes have been integrated into the genetic material of a genetically modified plant in order to improve certain properties of the plant. Such genetic modifications also in- clude, but are not limited to, targeted post-transitional modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as hydroxyphenylpyruvate dioxygenase (HPPD) inhibitors; acetolactate synthase (ALS) inhibitors, such as sulfonyl ureas (see e. g. US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073) or imidazolinones (see e. g. US 6,222,100, WO 01/82685, WO 00/026390, WO 97/41218, WO 98/002526, WO 98/02527, WO 04/106529, WO 05/20673, WO 03/014357, WO 03/13225, WO 03/14356, WO 04/16073); enolpyruvylshikimate-3-phosphate synthase (EPSPS) inhibitors, such as glyphosate (see e. g. WO 92/00377); glutamine synthetase (GS) inhibitors, such as glufosinate (see e.g. EP-A 242 236, EP-A 242 246) or oxynil herbicides (see e. g. US 5,559,024) as a result of conventional methods of breeding or genetic engineering. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox. Genetic engineering methods have been used to render cultivated plants, such as soybean, cotton, corn, beets and rape, tolerant to herbicides such as glyphosate and glufosinate, some of which are commercially available under the trade names RoundupReady® (glyphosatetolerant, Monsanto, U.S.A.) and Libertylink® (glu- fosinate-tolerant, Bayer CropScience, Germany). Fluopyram can also be combined with additional synthetic fungicides, this means that the treatment block comprises the subsequent application of the different fungicides/fungicidal mixtures listed. However, the order given in the list is not mandatory and the treatment step may comprise more than one application of the fungicides/fungicidal mixtures listed.

Suitable mixing partners for fluopyram are;
1) Inhibitors of the ergosterol biosynthesis, for example (1.001) aldimorph, (1.002) azaconazole, (1.003) bitertanol, (1.004) bromuconazole, (1.005) cyproconazole, (1.006) diclobutrazole, (1.007) difenoconazole, (1.008) diniconazole, (1.009) diniconazole-M, (1.010) dodemorph, (1.011) dodemorph acetate, (1.012) epoxiconazole, (1.013) etaconazole, (1.014) fenarimol, (1.015) fenbuconazole, (1.016) fenhexamid, (1.017) fenpropidin, (1.018) fenpropimorph, (1.019) fluquinconazole, (1.020) flurprimidol, (1.021) flusilazole, (1.022) flutriafol, (1.023) furconazole, (1.024) furconazole-cis, (1.025) hexaconazole, (1.026) imazalil, (1.027) imazalil sulfate, (1.028) imibenconazole, (1.029) ipconazole, (1.030) metconazole, (1.031) myclobutanil, (1.032) naftifine, (1.033) nuarimol, (1.034) oxpoconazole, (1.035) paclobutrazol, (1.036) pefurazoate, (1.037) penconazole, (1.038) piperalin, (1.039) prochloraz, (1.040) propiconazole, (1.041) prothioconazole, (1.042) pyributicarb, (1.043) pyrifenox, (1.044) quinconazole, (1.045) simeconazole, (1.046) spiroxamine, (1.047) tebuconazole, (1.048) terbinafine, (1.049) tetraconazole, (1.050) triadimefon, (1.051) triadimenol, (1.052) tridemorph, (1.053) triflumizole, (1.054) triforine, (1.055) triticonazole, (1.056) uniconazole, (1.057) uniconazole-p, (1.058) viniconazole, (1.059) voriconazole, (1.060) 1-(4-chlorophenyl)-2-(1H-1,2,4-triazol-1-yl)cycloheptanol, (1.061) methyl 1-(2,2-dimethyl-2,3-dihydro-1H-inden-1-yl)-1H-imidazole-5-carboxylate, (1.062) N'-{5-(difluoromethyl)-2-methyl-4-[3-(trimethylsilyl)propoxy]phenyl}-N-ethyl-N-methylimidoformamide, (1.063) N-ethyl-N-methyl-N'-{2-methyl-5-(trifluoromethyl)-4-[3-(trimethylsilyl)propoxy]phenyl}imidoformamide, (1.064) O-[1-(4-methoxyphenoxy)-3,3-dimethylbutan-2-yl] 1H-imidazole-1-carbothioate, (1.065) Pyrisoxazole, (1.066) 2-{[3-(2-chlorophenyl)-2-(2,4-difluorophenyl)oxiran-2-yl]methyl}-2,4-dihydro-3H-1,2,4-triazole-3-thione, (1.067) 1-{[3-(2-chlorophenyl)-2-(2,4-difluorophenyl)oxiran-2-yl]methyl}-1H-1,2,4-triazol-5-yl thiocyanate, (1.068) 5-(allylsulfanyl)-1-{[3-(2-chlorophenyl)-2-(2,4-difluorophenyl)oxiran-2-yl]methyl}-1H-1,2,4-triazole, (1.069) 2-[1-(2,4-dichlorophenyl)-5-hydroxy-2,6,6-trimethylheptan-4-yl]-2,4-dihydro-3H-1,2,4-triazole-3-thione, (1.070) 2-{[rel(2R,3S)-3-(2-chlorophenyl)-2-(2,4-difluorophenyl)oxiran-2-yl]methyl}-2,4-dihydro-3H-1,2,4-triazole-3-thione, (1.071) 2-{[rel(2R,3R)-3-(2-chlorophenyl)-2-(2,4-difluorophenyl)oxiran-2-yl]methyl}-2,4-dihydro-3H-1,2,4-triazole-3-thione, (1.072) 1-{[rel(2R,3S)-3-(2-chlorophenyl)-2-(2,4-difluorophenyl)oxiran-2-yl]methyl}-1H-1,2,4-triazol-5-yl thiocyanate, (1.073) 1-{[rel(2R,3R)-3-(2-chlorophenyl)-2-(2,4-difluorophenyl)oxiran-2-yl]methyl}-1H-1,2,4-triazol-5-yl thiocyanate, (1.074) 5-(allylsulfanyl)-1-{[rel(2R,3S)-3-(2-chlorophenyl)-2-(2,4-difluorophenyl)oxiran-2-yl]methyl}-1H-1,2,4-triazole, (1.075) 5-(allylsulfanyl)-1-{[rel(2R,3R)-3-(2-chlorophenyl)-2-(2,4-difluorophenyl)oxiran-2-yl]methyl}-1H-1,2,4-triazole, (1.076) 2-[(2S,4S,5S)-1-(2,4-dichlorophenyl)-5-hydroxy-2,6,6-trimethylheptan-4-yl]-2,4-dihydro-3H-1,2,4-triazole-3-thione, (1.077) 2-[(2R,4S,5S)-1-(2,4-dichlorophenyl)-5-hydroxy-2,6,6-trimethylheptan-4-yl]-2,4-dihydro-3H-1,2,4-triazole-3-thione, (1.078) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.079) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.080) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.081) 2-[(2R,4S,5R)-1-(2,4-dichlorophenyl)-5-hydroxy-2,6,6-trimethylheptan-4-yl]-2,4-dihydro-3H-1,2,4-triazole-3-thione, (1.082) 2-[(2R,4R,5S)-1-(2,4-dichlorophenyl)-5-hydroxy-2,6,6-trimethylheptan-4-yl]-2,4-dihydro-3H-1,2,4-triazole-3-thione, (1.083) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.084) 2-[4-(4-chlorophenoxy)-2-(trifluoromethyl)phenyl]-1-(1H-1,2,4-triazol-1-yl)propan-2-ol, (1.085) 2-[4-(4-chlorophenoxy)-2-(trifluoromethyl)phenyl]-1-(1H-1,2,4-triazol-1-yl)butan-2-ol, (1.086) 2-[4-(4-chlorophenoxy)-2-(trifluoromethyl)phenyl]-1-(1H-1,2,4-triazol-1-yl)pentan-2-ol, (1.087) 2-[2-chloro-4-(4-chlorophenoxy)phenyl]-1-(1H-1,2,4-triazol-1-yl)butan-2-ol, (1.088) 2-[2-chloro-4-(2,4-dichlorophenoxy)phenyl]-1-(1H-1,2,4-triazol-1-yl)propan-2-ol, (1.089) (2R)-2-(1-chlorocyclopropyl)-4-[(1R)-2,2-dichlorocyclopropyl]-1-(1H-1,2,4-triazol-1-yl)butan-2-ol, (1.090) (2R)-2-(1-chlorocyclopropyl)-4-[(1S)-2,2-dichlorocyclopropyl]-1-(1H-1,2,4-triazol-1-yl)butan-2-ol, (1.091) (2S)-2-(1-chlorocyclopropyl)-4-[(1S)-2,2-dichlorocyclopropyl]-1-(1H-1,2,4-triazol-1-yl)butan-2-ol, (1.092) (2S)-2-(1-chlorocyclopropyl)-4-[(1R)-2,2-dichlorocyclopropyl]-1-(1H-1,2,4-triazol-1-yl)butan-2-ol, (1.093) (1S,2R,5R)-5-(4-chlorobenzyl)-2-(chloromethyl)-2-methyl-1-(1H-1,2,4-triazol-1-ylmethyl)cyclopentanol, (1.094) (1R,2S,5S)-5-(4-chlorobenzyl)-2-(chloromethyl)-2-methyl-1-(1H-1,2,4-triazol-1-ylmethyl)cyclopentanol, (1.095) 5-(4-chlorobenzyl)-2-(chloromethyl)-2-methyl-1-(1H-1,2,4-triazol-1-ylmethyl)cyclopentanol, (1.096) (2R)-2-[4-(4-chlorophenoxy)-2-(trifluoromethyl)phenyl]-1-(1H-1,2,4-triazol-1-yl)propan-2-ol, (1.097) (2S)-2-[4-(4-chlorophenoxy)-2-(trifluoromethyl)phenyl]-1-(1H-1,2,4-triazol-1-yl)propan-2-ol, (1.098) 1-({(2R,4S)-2-[2-chloro-4-(4-chlorophenoxy)phenyl]-4-methyl-1,3-dioxolan-2-yl}methyl)-1H-1,2,4-triazole, (1.099) 1-({(2S,4S)-2-[2-chloro-4-(4-chlorophenoxy)phenyl]-4-methyl-1,3-dioxolan-2-yl}methyl)-1H-1,2,4-triazole, (1.100) fenpyrazamine, (1.101) N'-(4-{[3-(4-chlorobenzyl)-1,2,4-thiadiazol-5-yl]oxy}-2,5-dimethylphenyl)-N-ethyl-N-methylimidoformamide, (1.102) N'-{4-[(3-tert-butyl-4-cyano-1,2-thiazol-5-yl)oxy]-2-chloro-5-methylphenyl}-N-ethyl-N-methylimidoformamide, (1.103) [3-(4-chloro-2-fluorophenyl)-5-(2,4-difluorophenyl)-1,2-oxazol-4-yl](pyridin-3-yl)methanol, (1.104) (S)-[3-(4-chloro-2-fluorophenyl)-5-(2,4-difluorophenyl)-1,2-oxazol-4-yl](pyridin-3-yl)methanol, (1.105) (R)-[3-(4-chloro-2-fluorophenyl)-5-(2,4-difluorophenyl)-1,2-oxazol-4-yl](pyridin-3-yl)methanol, (1.106) N'-[5-bromo-6-(2,3-dihydro-1H-inden-2-yloxy)-2-methylpyridin-3-yl]-N-ethyl-N-methylimidoformamide, (1.107) N'-{5-bromo-6-[1-(3,5-difluorophenyl)ethoxy]-2-methylpyridin-3-yl}-N-ethyl-N-methylimidoformamide, (1.108) N'-{5-bromo-6-[(1R)-1-(3,5-difluorophenyl)ethoxy]-2-methylpyridin-3-yl}-N-ethyl-N-methylimidoformamide, (1.109) N'-{5-bromo-6-[(1S)-1-(3,5-difluorophenyl)ethoxy]-2-methylpyridin-3-yl}-N-ethyl-N-methylimidoformamide, (1.110) N'-{5-bromo-6-[(cis-4-isopropylcyclohexyl)oxy]-2-methylpyridin-3-yl}-N-ethyl-N-methylimidoformamide, (1.111) N'- {5-bromo-6-[(trans-4-isopropylcyclohexyl)oxy]-2-methylpyridin-3-yl}-N-ethyl-N-methylimidoformamide, (1.112) N'-(2,5-dimethyl-4-phenoxyphenyl)-N-ethyl-N-methylimidoformamide, (1.113) N'-{4-[(4,5-dichloro-1,3-thiazol-2-yl)oxy]-2,5-dimethylphenyl}-N-ethyl-N-methylimidoformamide, (1.114) N'-(4-{3-[(difluoromethyl)sulfanyl]phenoxy}-2,5-dimethylphenyl)-N-ethyl-N-methylimidoformamide, (1.115) N'-(2,5-dimethyl-4-{3-[(1,1,2,2-tetrafluoroethyl)sulfanyl]phenoxy}phenyl)-N-ethyl-N-methylimidoformamide, (1.116) N'-(2,5-dimethyl-4-{3-[(2,2,2-trifluoroethyl)sulfanyl]phenoxy}phenyl)-N-ethyl-N-methylimidoformamide, (1.117) N'-(2,5-dimethyl-4-{3-[(2,2,3,3-tetrafluoropropyl)sulfanyl]phenoxy}phenyl)-N-ethyl-N-methylimidoformamide, (1.118) N'-(2,5-dimethyl-4-{3-[(pentafluoroethyl)sulfanyl]phenoxy}phenyl)-N-ethyl-N-methylimidoformamide, (1.119) N'-(4-{[3-(difluoromethoxy)phenyl]sulfanyl}-2,5-dimethylphenyl)-N-ethyl-N-methylimidoformamide, (1.120) N'-(2,5-dimethyl-4- {[3-(1,1,2,2-tetrafluoroethoxy)phenyl]sulfanyl}phenyl)-N-ethyl-N-methylimidoformamide, (1.121) N'-(2,5-dimethyl-4-{[3-(2,2,2-trifluoroethoxy)phenyl]sulfanyl}phenyl)-N-ethyl-N-methylimidoformamide, (1.122) N'-(2,5-dimethyl-4- {[3-(2,2,3,3-tetrafluoropropoxy)phenyl]sulfanyl}phenyl)-N-ethyl-N-methylimidoformamide, (1.123) N'-(2,5-dimethyl-4-{[3-(pentafluoroethoxy)phenyl]sulfanyl}phenyl)-N-ethyl-N-methylimidoformamide.
2) Inhibitors of the respiratory chain at complex I or II, for example (2.001) bixafen, (2.002) boscalid, (2.003) carboxin, (2.004) diflumetorim, (2.005) fenfuram, (2.006) fluopyram, (2.007) flutolanil, (2.008) fluxapyroxad, (2.009) furametpyr, (2.010) furmecyclox, (2.011) isopyrazam (mixture of syn-epimeric racemate 1RS,4SR,9RS and anti-epimeric racemate 1RS,4SR,9SR), (2.012) isopyrazam (anti-epimeric racemate 1RS,4SR,9SR), (2.013) isopyrazam (anti-epimeric enantiomer 1R,4S,9S), (2.014) isopyrazam (anti-epimeric enantiomer 1S,4R,9R), (2.015) isopyrazam (syn-epimeric racemate 1RS,4SR,9RS), (2.016) isopyrazam (syn-epimeric enantiomer 1R,4S,9R), (2.017) isopyrazam (syn-epimeric enantiomer 1S,4R,9S), (2.018) mepronil, (2.019) oxycarboxin, (2.020) penflufen, (2.021) penthiopyrad, (2.022) sedaxane, (2.023) thifluzamide, (2.024) 1-methyl-N-[2-(1,1,2,2-tetrafluoroethoxy)phenyl]-3-(trifluoromethyl)-1H-pyrazole-4-carboxamide, (2.025) 3-(difluoromethyl)-1-methyl-N-[2-(1,1,2,2-tetrafluoroethoxy)phenyl]-1H-pyrazole-4-carboxamide, (2.026) 3-(difluoromethyl)-N-[4-fluoro-2-(1,1,2,3,3,3-hexafluoropropoxy)phenyl]-1-methyl-1H-pyrazole-4-carboxamide, (2.027) N-[1-(2,4-dichlorophenyl)-1-methoxypropan-2-yl]-3-(difluoromethyl)-1-methyl-1H-pyrazole-4-carboxamide, (2.028) 5,8-difluoro-N-[2-(2-fluoro-4-{[4-(trifluoromethyl)pyridin-2-yl]oxy}phenyl)ethyl]quinazolin-4-amine, (2.029) benzovindiflupyr, (2.030) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.031) N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, (2.032) 3-(difluoromethyl)-1-methyl-N-(1,1,3-trimethyl-2,3-dihydro-1H-inden-4-yl)-1H-pyrazole-4-carboxamide, (2.033) 1,3,5-trimethyl-N-(1,1,3-trimethyl-2,3-dihydro-1H-inden-4-yl)-1H-pyrazole-4-carboxamide, (2.034) 1-methyl-3-(trifluoromethyl)-N-(1,1,3-trimethyl-2,3-dihydro-1H-inden-4-yl)-1H-pyrazole-4-carboxamide, (2.035) 1-methyl-3-(trifluoromethyl)-N-[(3R)-1,1,3-trimethyl-2,3-dihydro-1H-inden-4-yl]-1H-pyrazole-4-carboxamide, (2.036) 1-methyl-3-(trifluoromethyl)-N-[(3S)-1,1,3-trimethyl-2,3-dihydro-1H-inden-4-yl]-1H-pyrazole-4-carboxamide, (2.037) 3-(difluoromethyl)-1-methyl-N-[(3S)-1,1,3-trimethyl-2,3-dihydro-1H-inden-4-yl]-1H-pyrazole-4-carboxamide, (2.038) 3-(difluoromethyl)-1-methyl-N-[(3R)-1,1,3-trimethyl-2,3-dihydro-1H-inden-4-yl]-1H-pyrazole-4-carboxamide, (2.039) 1,3,5-trimethyl-N-[(3R)-1,1,3-trimethyl-2,3-dihydro-1H-inden-4-yl]-1H-pyrazole-4-carboxamide, (2.040) 1,3,5-trimethyl-N-[(3S)-1,1,3-trimethyl-2,3-dihydro-1H-inden-4-yl]-1H-pyrazole-4-carboxamide, (2.041) benodanil, (2.042) 2-chloro-N-(1,1,3-trimethyl-2,3-dihydro-1H-inden-4-yl)pyridine-3-carboxamide, (2.043) Isofetamid, (2.044) 1-methyl-3-(trifluoromethyl)-N-[2'-(trifluoromethyl)biphenyl-2-yl]-1H-pyrazole-4-carboxamide, (2.045) N-(4'-chlorobiphenyl-2-yl)-3-(difluoromethyl)-1-methyl-1H-pyrazole-4-carboxamide, (2.046) N-(2',4'-dichlorobiphenyl-2-yl)-3-(difluoromethyl)-1-methyl-1H-pyrazole-4-carboxamide, (2.047) 3-(difluoromethyl)-1-methyl-N-[4'-(trifluoromethyl)biphenyl-2-yl]-1H-pyrazole-4-carboxamide, (2.048) N-(2',5'-difluorobiphenyl-2-yl)-1-methyl-3-(trifluoromethyl)-1H-pyrazole-4-carboxamide, (2.049) 3-(difluoromethyl)-1-methyl-N-[4'-(prop-1-yn-1-yl)biphenyl-2-yl]-1H-pyrazole-4-carboxamide, (2.050) 5-fluoro-1,3-dimethyl-N-[4'-(prop-1-yn-1-yl)biphenyl-2-yl]-1H-pyrazole-4-carboxamide, (2.051) 2-chloro-N-[4'-(prop-1-yn-1-yl)biphenyl-2-yl]nicotinamide, (2.052) 3-(difluoromethyl)-N-[4'-(3,3-dimethylbut-1-yn-1-yl)biphenyl-2-yl]-1-methyl-1H-pyrazole-4-carboxamide, (2.053) N-[4'-(3,3-dimethylbut-1-yn-1-yl)biphenyl-2-yl]-5-fluoro-1,3-dimethyl-1H-pyrazole-4-carboxamide, (2.054) 3-(difluoromethyl)-N-(4'-ethynylbiphenyl-2-yl)-1-methyl-1H-pyrazole-4-carboxamide, (2.055) N-(4'-ethynylbiphenyl-2-yl)-5-fluoro-1,3-dimethyl-1H-pyrazole-4-carboxamide, (2.056) 2-chloro-N-(4'-ethynylbiphenyl-2-yl)nicotinamide, (2.057) 2-chloro-N-[4'-(3,3-dimethylbut-1-yn-1-yl)biphenyl-2-yl]nicotinamide, (2.058) 4-(difluoromethyl)-2-methyl-N-[4'-(trifluoromethyl)biphenyl-2-yl]-1,3-thiazole-5-carboxamide, (2.059) 5-fluoro-N-[4'-(3-hydroxy-3-methylbut-1-yn-1-yl)biphenyl-2-yl]-1,3-dimethyl-1H-pyrazole-4-carboxamide, (2.060) 2-chloro-N-[4'-(3-hydroxy-3-methylbut-1-yn-1-yl)biphenyl-2-yl]nicotinamide, (2.061) 3-(difluoromethyl)-N-[4'-(3-methoxy-3-methylbut-1-yn-1-yl)biphenyl-2-yl]-1-methyl-1H-pyrazole-4-carboxamide, (2.062) 5-fluoro-N-[4'-(3-methoxy-3-methylbut-1-yn-1-yl)biphenyl-2-yl]-1,3-dimethyl-1H-pyrazole-4-carboxamide, (2.063) 2-chloro-N-[4'-(3-methoxy-3-methylbut-1-yn-1-yl)biphenyl-2-yl]nicotinamide, (2.064) 1,3-dimethyl-N-(1,1,3-trimethyl-2,3-dihydro-1H-inden-4-yl)-1H-pyrazole-4-carboxamide, (2.065) 1,3-dimethyl-N-[(3R)-1,1,3-trimethyl-2,3-dihydro-1H-inden-4-yl]-1H-pyrazole-4-carboxamide, (2.066) 1,3-dimethyl-N-[(3S)-1,1,3-trimethyl-2,3-dihydro-1H-inden-4-yl]-1H-pyrazole-4-carboxamide, (2.067) 3-(difluoromethyl)-N-methoxy-1-methyl-N-[1-(2,4,6-trichlorophenyl)propan-2-yl]-1H-pyrazole-4-carboxamide, (2.068) 3-(difluoromethyl)-N-(7-fluoro-1,1,3-trimethyl-2,3-dihydro-1H-inden-4-yl)-1-methyl-1H-pyrazole-4-carboxamide, (2.069) 3-(difluoromethyl)-N-[(3R)-7-fluoro-1,1,3-trimethyl-2,3-dihydro-1H-inden-4-yl]-1-methyl-1H-pyrazole-4-carboxamide, (2.070) 3-(difluoromethyl)-N-[(3S)-7-fluoro-1,1,3-trimethyl-2,3-dihydro-1H-inden-4-yl]-1-methyl-1H-pyrazole-4-carboxamide, (2.071) Pyraziflumid, (2.072) 2-fluoro-6-(trifluoromethyl)-N-(1,1,3-trimethyl-2,3-dihydro-1H-inden-4-yl)benzamide, (2.073) N-cyclopropyl-3-(difluoromethyl)-5-fluoro-N-(2-isopropylbenzyl)-1-methyl-1H-pyrazole-4-carboxamide, (2.074) N-cyclopropyl-N-(2-cyclopropylbenzyl)-3-(difluoromethyl)-5-fluoro-1-methyl-1H-pyrazole-4-carboxamide, (2.075) N-(2-tert-butylbenzyl)-N-cyclopropyl-3-(difluoromethyl)-5-fluoro-1-methyl-1H-pyrazole-4-carboxamide, (2.076) N-(5-chloro-2-ethylbenzyl)-N-cyclopropyl-3-(difluoromethyl)-5-fluoro-1-methyl-1H-pyrazole-4-carboxamide, (2.077) N-(5-chloro-2-isopropylbenzyl)-N-cyclopropyl-3-(difluoromethyl)-5-fluoro-1-methyl-1H-pyrazole-4-carboxamide, (2.078) N-cyclopropyl-3-(difluoromethyl)-N-(2-ethyl-5-fluorobenzyl)-5-fluoro-1-methyl-1H-pyrazole-4-carboxamide, (2.079) N-cyclopropyl-3-(difluoromethyl)-5-fluoro-N-(5-fluoro-2-isopropylbenzyl)-1-methyl-1 H-pyrazole-4-carboxamide, (2.080) N-cyclopropyl-N-(2-cyclopropyl-5-fluorobenzyl)-3-(difluoromethyl)-5-fluoro-1-methyl-1H-pyrazole-4-carboxamide, (2.081) N-(2-cyclopentyl-5-fluorobenzyl)-N-cyclopropyl-3-(difluoromethyl)-5-fluoro-1-methyl-1H-pyrazole-4-carboxamide, (2.082) N-cyclopropyl-3-(difluoromethyl)-5-fluoro-N-(2-fluoro-6-isopropylbenzyl)-1-methyl-1H-pyrazole-4-carboxamide, (2.083) N-cyclopropyl-3-(difluoromethyl)-N-(2-ethyl-5-methylbenzyl)-5-fluoro-1-methyl-1H-pyrazole-4-carboxamide, (2.084) N-cyclopropyl-3-(difluoromethyl)-5-fluoro-N-(2-isopropyl-5-methylbenzyl)-1-methyl-1H-pyrazole-4-carboxamide, (2.085) N-cyclopropyl-N-(2-cyclopropyl-5-methylbenzyl)-3-(difluoromethyl)-5-fluoro-1-methyl-1H-pyrazole-4-carboxamide, (2.086) N-(2-tert-butyl-5-methylbenzyl)-N-cyclopropyl-3-(difluoromethyl)-5-fluoro-1-methyl-1H-pyrazole-4-carboxamide, (2.087) N-[5-chloro-2-(trifluoromethyl)benzyl]-N-cyclopropyl-3-(difluoromethyl)-5-fluoro-1-methyl-1H-pyrazole-4-carboxamide, (2.088) N-cyclopropyl-3-(difluoromethyl)-5-fluoro-1-methyl-N-[5-methyl-2-(trifluoromethyl)benzyl]-1H-pyrazole-4-carboxamide, (2.089) N-[2-chloro-6-(trifluoromethyl)benzyl]-N-cyclopropyl-3-(difluoromethyl)-5-fluoro-1-methyl-1H-pyrazole-4-carboxamide, (2.090) N-[3-chloro-2-fluoro-6-(trifluoromethyl)benzyl]-N-cyclopropyl-3-(difluoromethyl)-5-fluoro-1-methyl-1H-pyrazole-4-carboxamide, (2.091) N-cyclopropyl-3-(difluoromethyl)-N-(2-ethyl-4,5-dimethylbenzyl)-5-fluoro-1-methyl-1H-pyrazole-4-carboxamide, (2.092) N-cyclopropyl-3-(difluoromethyl)-5-fluoro-N-(2-isopropylbenzyl)-1-methyl-1H-pyrazole-4-carbothioamide.
3) Inhibitors of the respiratory chain at complex III, for example (3.001) ametoctradin, (3.002) amisulbrom, (3.003) azoxystrobin, (3.004) cyazofamid, (3.005) coumethoxystrobin, (3.006) coumoxystrobin, (3.007) dimoxystrobin, (3.008) enoxastrobin, (3.009) famoxadone, (3.010) fenamidone, (3.011) flufenoxystrobin, (3.012) fluoxastrobin, (3.013) kresoxim-methyl, (3.014) metominostrobin, (3.015) orysastrobin, (3.016) picoxystrobin, (3.017) pyraclostrobin, (3.018) pyrametostrobin, (3.019) pyraoxystrobin, (3.020) pyribencarb, (3.021) triclopyricarb, (3.022) trifloxystrobin, (3.023) (2E)-2-(2-{[6-(3-chloro-2-methylphenoxy)-5-fluoropyrimidin-4-yl]oxy}phenyl)-2-(methoxyimino)-N-methylacetamide, (3.024) (2E)-2-(methoxyimino)-N-methyl-2-(2-{[({(1E)-1-[3-(trifluoromethyl)phenyl]ethylidene}amino)oxy]methyl}phenyl)acetamide, (3.025) (2E)-2-(methoxyimino)-N-methyl-2-{2-[(E)-({1-[3-(trifluoromethyl)phenyl]ethoxy}imino)methyl]phenyl}acetamide, (3.026) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.027) Fenaminostrobin, (3.028) 5-methoxy-2-methyl-4-(2-{[({(1E)-1-[3-(trifluoromethyl)phenyl]ethylidene}amino)oxy]methyl}phenyl)-2,4-dihydro-3H-1,2,4-triazol-3-one, (3.029) methyl (2E)-2-{2-[({cyclopropyl[(4-methoxyphenyl)imino]methyl}sulfanyl)methyl]phenyl}-3-methoxyacrylate, (3.030) N-(3-ethyl-3,5,5-trimethylcyclohexyl)-3-formamido-2-hydroxybenzamide, (3.031) 2-{2-[(2,5-dimethylphenoxy)methyl]phenyl}-2-methoxy-N-methylacetamide, (3.032) (2R)-2-{2-[(2,5-dimethylphenoxy)methyl]phenyl}-2-methoxy-N-methylacetamide, (3.033) (2E,3Z)-5-{[1-(4-chlorophenyl)-1H-pyrazol-3-yl]oxy}-2-(methoxyimino)-N,3-dimethylpent-3-enamide, (3.034) (2S)-2-{2-[(2,5-dimethylphenoxy)methyl]phenyl}-2-methoxy-N-methylacetamide, (3.035) (3S,6S,7R,8R)-8-benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoate.
4) Inhibitors of the mitosis and cell division, for example (4.001) benomyl, (4.002) carbendazim, (4.003) chlorfenazole, (4.004) diethofencarb, (4.005) ethaboxam, (4.006) fluopicolide, (4.007) fuberidazole, (4.008) pencycuron, (4.009) thiabendazole, (4.010) thiophanate-methyl, (4.011) thiophanate, (4.012) zoxamide, (4.013) 5-chloro-7-(4-methylpiperidin-1-yl)-6-(2,4,6-trifluorophenyl)[1,2,4]triazolo[1,5-a]pyrimidine, (4.014) 3-chloro-5-(6-chloropyridin-3-yl)-6-methyl-4-(2,4,6-trifluorophenyl)pyridazine, (4.015) 3-chloro-5-(4-chlorophenyl)-4-(2,6-difluorophenyl)-6-methylpyridazine, (4.016) 4-(4-chlorophenyl)-5-(2,6-difluorophenyl)-3,6-dimethylpyridazine, (4.017) N-[(5-bromo-3-chloropyridin-2-yl)methyl]-2,4-dichloronicotinamide, (4.018) N-[1-(5-bromo-3-chloropyridin-2-yl)ethyl]-2,4-dichloronicotinamide, (4.019) N-[1-(5-bromo-3-chloropyridin-2-yl)ethyl]-2-fluoro-4-iodonicotinamide, (4.020) N-(4-chloro-2,6-difluorophenyl)-4-(2-chloro-4-fluorophenyl)-1,3-dimethyl-1H-pyrazol-5-amine, (4.021) 4-(2-chloro-4-fluorophenyl)-N-(2-fluorophenyl)-1,3-dimethyl-1H-pyrazol-5-amine, (4.022) 4-(2-chloro-4-fluorophenyl)-N-(2,6-difluorophenyl)-1,3-dimethyl-1H-pyrazol-5-amine, (4.023) 4-(2-chloro-4-fluorophenyl)-N-(2-chloro-6-fluorophenyl)-1,3-dimethyl-1H-pyrazol-5-amine, (4.024) 4-(2-bromo-4-fluorophenyl)-N-(2-chloro-6-fluorophenyl)-1,3-dimethyl-1H-pyrazol-5-amine, (4.025) N-(2-bromo-6-fluorophenyl)-4-(2-chloro-4-fluorophenyl)-1,3-dimethyl-1H-pyrazol-5-amine, (4.026) 4-(2-bromo-4-fluorophenyl)-N-(2-bromophenyl)-1,3-dimethyl-1H-pyrazol-5-amine, (4.027) 4-(2-bromo-4-fluorophenyl)-N-(2-bromo-6-fluorophenyl)-1,3-dimethyl-1H-pyrazol-5-amine, (4.028) 4-(2-bromo-4-fluorophenyl)-N-(2-chlorophenyl)-1,3-dimethyl-1H-pyrazol-5-amine, (4.029) N-(2-bromophenyl)-4-(2-chloro-4-fluorophenyl)-1,3-dimethyl-1H-pyrazol-5-amine, (4.030) 4-(2-chloro-4-fluorophenyl)-N-(2-chlorophenyl)-1,3-dimethyl-1H-pyrazol-5-amine, (4.031) 4-(2-bromo-4-fluorophenyl)-N-(2,6-difluorophenyl)-1,3-dimethyl-1H-pyrazol-5-amine, (4.032) 4-(2-bromo-4-fluorophenyl)-N-(2-fluorophenyl)-1,3-dimethyl-1H-pyrazol-5-amine, (4.033) 3-chloro-4-(2,6-difluorophenyl)-6-methyl-5-phenylpyridazine.
5) Compounds capable to have a multisite action, for example (5.001) bordeaux mixture, (5.002) captafol, (5.003) captan, (5.004) chlorothalonil, (5.005) copper hydroxide, (5.006) copper naphthenate, (5.007) copper oxide, (5.008) copper oxychloride, (5.009) copper(2+) sulfate, (5.010) dichlofluanid, (5.011) dithianon, (5.012) dodine, (5.013) dodine free base, (5.014) ferbam, (5.015) fluorofolpet, (5.016) folpet, (5.017) guazatine, (5.018) guazatine acetate, (5.019) iminoctadine, (5.020) iminoctadine albesilate, (5.021) iminoctadine triacetate, (5.022) mancopper, (5.023) mancozeb, (5.024) maneb, (5.025) metiram, (5.026) metiram zinc, (5.027) oxine-copper, (5.028) propamidine, (5.029) propineb, (5.030) sulfur and sulfur preparations including calcium polysulfide, (5.031) thiram, (5.032) tolylfluanid, (5.033) zineb, (5.034) ziram, (5.035) anilazine.
6) Compounds capable to induce a host defence, for example (6.001) acibenzolar-S-methyl, (6.002) isotianil, (6.003) probenazole, (6.004) tiadinil, (6.005) laminarin.
7) Inhibitors of the amino acid and/or protein biosynthesis, for example (7.001) andoprim, (7.002) blasticidin-S, (7.003) cyprodinil, (7.004) kasugamycin, (7.005) kasugamycin hydrochloride hydrate, (7.006) mepanipyrim, (7.007) pyrimethanil, (7.008) 3-(5-fluoro-3,3,4,4-tetramethyl-3,4-dihydroisoquinolin-1-yl)quinoline, (7.009) oxytetracycline, (7.010) streptomycin.
8) Inhibitors of the ATP production, for example (8.001) fentin acetate, (8.002) fentin chloride, (8.003) fentin hydroxide, (8.004) silthiofam.
9) Inhibitors of the cell wall synthesis, for example (9.001) benthiavalicarb, (9.002) dimethomorph, (9.003) flumorph, (9.004) iprovalicarb, (9.005) mandipropamid, (9.006) polyoxins, (9.007) polyoxorim, (9.008) validamycin A, (9.009) valifenalate, (9.010) polyoxin B, (9.011) (2E)-3-(4-tert-butylphenyl)-3-(2-chloropyridin-4-yl)-1-(morpholin-4-yl)prop-2-en-1-one, (9.012) (2Z)-3-(4-tert-butylphenyl)-3-(2-chloropyridin-4-yl)-1-(morpholin-4-yl)prop-2-en-1-one, (9.013) pyrimorph.
10) Inhibitors of the lipid and membrane synthesis, for example (10.001) biphenyl, (10.002) chloroneb, (10.003) dicloran, (10.004) edifenphos, (10.005) etridiazole, (10.006) iodocarb, (10.007) iprobenfos, (10.008) isoprothiolane, (10.009) propamocarb, (10.010) propamocarb hydrochloride, (10.011) prothiocarb, (10.012) pyrazophos, (10.013) quintozene, (10.014) tecnazene, (10.015) tolclofos-methyl.
11) Inhibitors of the melanin biosynthesis, for example (11.001) carpropamid, (11.002) diclocymet, (11.003) fenoxanil, (11.004) phthalide, (11.005) pyroquilon, (11.006) tricyclazole, (11.007) 2,2,2-trifluoroethyl {3-methyl-1-[(4-methylbenzoyl)amino]butan-2-yl}carbamate.
12) Inhibitors of the nucleic acid synthesis, for example (12.001) benalaxyl, (12.002) benalaxyl-M (kiralaxyl), (12.003) bupirimate, (12.004) clozylacon, (12.005) dimethirimol, (12.006) ethirimol, (12.007) furalaxyl, (12.008) hymexazol, (12.009) metalaxyl, (12.010) metalaxyl-M (mefenoxam), (12.011) ofurace, (12.012) oxadixyl, (12.013) oxolinic acid, (12.014) octhilinone.
13) Inhibitors of the signal transduction, for example (13.001) chlozolinate, (13.002) fenpiclonil, (13.003) fludioxonil, (13.004) iprodione, (13.005) procymidone, (13.006) quinoxyfen, (13.007) vinclozolin, (13.008) proquinazid.
14) Compounds capable to act as an uncoupler, for example (14.001) binapacryl, (14.002) dinocap, (14.003) ferimzone, (14.004) fluazinam, (14.005) meptyldinocap.
15) Further compounds, for example (15.001) benthiazole, (15.002) bethoxazin, (15.003) capsimycin, (15.004) carvone, (15.005) chinomethionat, (15.006) pyriofenone (chlazafenone), (15.007) cufraneb, (15.008) cyflufenamid, (15.009) cymoxanil, (15.010) cyprosulfamide, (15.011) dazomet, (15.012) debacarb, (15.013) dichlorophen, (15.014) diclomezine, (15.015) difenzoquat, (15.016) difenzoquat metilsulfate, (15.017) diphenylamine, (15.018) ecomate, (15.019) flumetover, (15.020) fluoroimide, (15.021) flusulfamide, (15.022) flutianil, (15.023) fosetyl-aluminium, (15.024) fosetyl-calcium, (15.025) fosetyl-sodium, (15.026) hexachlorobenzene, (15.027) irumamycin, (15.028) methasulfocarb, (15.029) methyl isothiocyanate, (15.030) metrafenone, (15.031) mildiomycin, (15.032) natamycin, (15.033) nickel dimethyldithiocarbamate, (15.034) nitrothal-isopropyl, (15.035) oxamocarb, (15.036) oxyfenthiin, (15.037) pentachlorophenol and salts, (15.038) phenothrin, (15.039) phosphorous acid and its salts, (15.040) propamocarb-fosetylate, (15.041) propanosine-sodium, (15.042) pyrrolnitrine, (15.043) tebufloquin, (15.044) tecloftalam, (15.045) tolnifanide, (15.046) triazoxide, (15.047) trichlamide, (15.048) zarilamid, (15.049) 1-(4-{4-[(5R)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.050) 1-(4-{4-[(5S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.051) Oxathiapiprolin, (15.052) 1-(4-methoxyphenoxy)-3,3-dimethylbutan-2-yl 1H-imidazole-1-carboxylate, (15.053) 2,3,5,6-tetrachloro-4-(methylsulfonyl)pyridine, (15.054) 2,3-dibutyl-6-chlorothieno[2,3-d]pyrimidin-4(3H)-one, (15.055) 2,6-dimethyl-1H,5H-[1,4]dithiino[2,3-c:5,6-c']dipyrrole-1,3,5,7(2H,6H)-tetrone, (15.056) 2-[5-methyl-3-(trifluoromethyl)-1H-pyrazol-1-yl]-1-(4-{4-[(5R)-5-phenyl-4,5-dihydro-1,2-oxazol-3-yl]-1,3-thiazol-2-yl}piperidin-1-yl)ethanone, (15.057) 2-[5-methyl-3-(trifluoromethyl)-1H-pyrazol-1-yl]-1-(4-{4-[(5S)-5-phenyl-4,5-dihydro-1,2-oxazol-3-yl]-1,3-thiazol-2-yl}piperidin-1-yl)ethanone, (15.058) 2-[5-methyl-3-(trifluoromethyl)-1H-pyrazol-1-yl]-1-{4-[4-(5-phenyl-4,5-dihydro-1,2-oxazol-3-yl)-1,3-thiazol-2-yl]piperidin-1-yl}ethanone, (15.059) 2-butoxy-6-iodo-3-propyl-4H-chromen-4-one, (15.060) 2-chloro-5-[2-chloro-1-(2,6-difluoro-4-methoxyphenyl)-4-methyl-1H-imidazol-5-yl]pyridine, (15.061) 2-phenylphenol and salts, (15.062) 3-(4,4,5-trifluoro-3,3-dimethyl-3,4-dihydroisoquinolin-1-yl)quinoline, (15.063) 3,4,5-trichloropyridine-2,6-dicarbonitrile, (15.064) 5-amino-1,3,4-thiadiazole-2-thiol, (15.065) 5-chloro-N'-phenyl-N'-(prop-2-yn-1-yl)thiophene-2-sulfonohydrazide, (15.066) 5-fluoro-2-[(4-fluorobenzyl)oxy]pyrimidin-4-amine, (15.067) 5-fluoro-2-[(4-methylbenzyl)oxy]pyrimidin-4-amine, (15.068) 5-methyl-6-octyl[1,2,4]triazolo[1,5-a]pyrimidin-7-amine, (15.069) ethyl (2Z)-3-amino-2-cyano-3-phenylacrylate, (15.070) N-(4-chlorobenzyl)-3-[3-methoxy-4-(prop-2-yn-1-yloxy)phenyl]propanamide, (15.071) N-[(4-chlorophenyl)(cyano)methyl]-3-[3-methoxy-4-(prop-2-yn-1-yloxy)phenyl]propanamide, (15.072) N- {(E)-[(cyclopropylmethoxy)imino] [6-(difluoromethoxy)-2,3-difluorophenyl]methyl}-2-phenylacetamide, (15.073) N-{(Z)-[(cyclopropylmethoxy)imino][6-(difluoromethoxy)-2,3-difluorophenyl]methyl}-2-phenylacetamide, (15.074) N-methyl-2-(1-{[5-methyl-3-(trifluoromethyl)-1H-pyrazol-1-yl]acetyl}piperidin-4-yl)-N-(1,2,3,4-tetrahydronaphthalen-1-yl)-1,3-thiazole-4-carboxamide, (15.075) N-methyl-2-(1-{[5-methyl-3-(trifluoromethyl)-1H-pyrazol-1-yl]acetyl}piperidin-4-yl)-N-[(1R)-1,2,3,4-tetrahydronaphthalen-1-yl]-1,3-thiazole-4-carboxamide, (15.076) N-methyl-2-(1-{[5-methyl-3-(trifluoromethyl)-1H-pyrazol-1-yl]acetyl}piperidin-4-yl)-N-[(1S)-1,2,3,4-tetrahydronaphthalen-1-yl]-1,3-thiazole-4-carboxamide, (15.077) pentyl {6-[({[(1-methyl-1H-tetrazol-5-yl)(phenyl)methylene]amino}oxy)methyl]pyridin-2-yl} carbamate, (15.078) phenazine-1 -carboxylic acid, (15.079) quinolin-8-ol, (15.080) quinolin-8-ol sulfate (2:1), (15.081) tert-butyl {6-[({[(1-methyl-1H-tetrazol-5-yl)(phenyl)methylene]amino}oxy)methyl]pyridin-2-yl}carbamate, (15.082) (5-bromo-2-methoxy-4-methylpyridin-3-yl)(2,3,4-trimethoxy-6-methylphenyl)methanone, (15.083) N-[2-(4-{[3-(4-chlorophenyl)prop-2-yn-1-yl]oxy}-3-methoxyphenyl)ethyl]-N2-(methylsulfonyl)valinamide, (15.084) 4-oxo-4-[(2-phenylethyl)amino]butanoic acid, (15.085) but-3-yn-1-yl {6-[({[(Z)-(1-methyl-1H-tetrazol-5-yl)(phenyl)methylene]amino}oxy)methyl]pyridin-2-yl}carbamate, (15.086) 4-amino-5-fluoropyrimidin-2-ol (tautomeric form: 4-amino-5-fluoropyrimidin-2(1H)- one), (15.087) propyl 3,4,5-trihydroxybenzoate, (15.088) 2-(6-benzylpyridin-2-yl)quinazoline, (15.089) 2-[6-(3-fluoro-4-methoxyphenyl)-5-methylpyridin-2-yl]quinazoline, (15.090) 3-(4,4-difluoro-3,3-dimethyl-3,4-dihydroisoquinolin-1-yl)quinoline, (15.091) Abscisic acid, (15.092) 9-fluoro-2,2-dimethyl-5-(quinolin-3-yl)-2,3-dihydro-1,4-benzoxazepine, (15.093) 2-{2-fluoro-6-[(8-fluoro-2-methylquinolin-3-yl)oxy]phenyl}propan-2-ol, (15.094) 2-{2-[(7,8-difluoro-2-methylquinolin-3-yl)oxy]-6-fluorophenyl}propan-2-ol, (15.095) 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, (15.096) 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl;-1,3-thiazol-2-yl)piperidin-1-yl]ethanone, (15.097) 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, (15.098) 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, (15.099) 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.100) 2-[3,5-bis(difluoromethyl)-1H-pyrazol-1-yl]-1-[4-(4-{(5S)-5-[2-(prop-2-yn-1-yloxy)phenyl]-4,5-dihydro-1,2-oxazol-3-yl}-1,3-thiazol-2-yl)piperidin-1-yl]ethanone, (15.101) 2-[3,5-bis(difluoromethyl)-1H-pyrazol-1-yl]-1-[4-(4-{(5R)-5-[2-(prop-2-yn-1-yloxy)phenyl]-4,5-dihydro-1,2-oxazol-3-yl}-1,3-thiazol-2-yl)piperidin-1-yl]ethanone, (15.102) 2-[3,5-bis(difluoromethyl)-1H-pyrazol-1-yl]-1-[4-(4-{(5S)-5-[2-fluoro-6-(prop-2-yn-1-yloxy)phenyl]-4,5-dihydro-1,2-oxazol-3-yl}-1,3-thiazol-2-yl)piperidin-1-yl]ethanone, (15.103) 2-[3,5-bis(difluoromethyl)-1H-pyrazol-1-yl]-1-[4-(4-{(5R)-5-[2-fluoro-6-(prop-2-yn-1-yloxy)phenyl]-4,5-dihydro-1,2-oxazol-3-yl}-1,3-thiazol-2-yl)piperidin-1-yl]ethanone, (15.104) 2-[3,5-bis(difluoromethyl)-1H-pyrazol-1-yl]-1-[4-(4-{(5S)-5-[2-chloro-6-(prop-2-yn-1-yloxy)phenyl]-4,5-dihydro-1,2-oxazol-3-yl}-1,3-thiazol-2-yl)piperidin-1-yl]ethanone, (15.105) 2-[3,5-bis(difluoromethyl)-1H-pyrazol-1-yl]-1-[4-(4-{(5R)-5-[2-chloro-6-(prop-2-yn-1-yloxy)phenyl]-4,5-dihydro-1,2-oxazol-3-yl}-1,3-thiazol-2-yl)piperidin-1-yl]ethanone, (15.106) 2-{(5S)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, (15.107) 2-{(5R)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, (15.108) 2-{(5S)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.109) 2-{(5R)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate.

The combined used of synthetic fungicides and BCAs according to the invention is dis- tinguished by an outstanding effectiveness against a broad spectrum of phytopatho- genic fungi, including soil-borne fungi, which derive especially from the classes of the Plasmodiophoromycetes, Peronosporomycetes (syn. Oomycetes), Chytridiomycetes, Zygomycetes, Ascomycetes, Basidiomycetes and Deuteromycetes (syn. Fungi imper- fecti). Advantageously, the method of the invention is suitable for controlling the follow- ing plant diseases:
*Albugo* spp. (white rust) on ornamentals, vegetables (e. g. *A. candida)* and sunflowers (e. g. *A. tragopogonis); Alternaria* spp. (Alternaria leaf spot) on vegetables, rape, cab- bage (A. *brassicola* or *brassicae*), sugar beets (A. *tenuis),* fruits, rice, soybeans, pota- toes (e. g. *A. so*/*ani* or *A. alternata),* tomatoes (e. g. *A. so*/*ani* or *A. alternata),* carrots (A. *dauct)* and wheat; *Aphanomyces* spp. on sugar beets and vegetables; *Ascochyta* spp. on cereals and vegetables, e. g. *A. tritici* (anthracnose) on wheat and *A. hordei* on barley; *Bipolaris* and *Drechslera* spp. (teleomorph: *Cochliobolus* spp.), e. g. Southern leaf blight *(D. maydis)* or Northern leaf blight (B. *zeicola)* on corn, e. g. spot blotch (B. *sorokiniana)* on cereals and e.g. *B. orizae* on rice and turfs; *Blumeria* (formerly *Erysiphe) graminis* (powdery mildew) on cereals (e. g. on wheat or barley); *Botrytis cinerea* (teleomorph: *Botryotinia fuckeliana:* grey mold) on fruits and berries (e. g. strawber- ries), vegetables (e. g. lettuce, carrots, celery and cabbages), rape, flowers, vines, for- estry plants and wheat; *Bremia lactucae* (downy mildew) on lettuce; *Ceratoeystis* (syn. *Ophiostoma)* spp. (rot or wilt) on broad-leaved trees and evergreens, e. g. C. *ulmi* (Dutch elm disease) on elms; *Cercospora* spp. (Cercospora leaf spots) on corn (e.g. Gray leaf spot: C. *zeaemaydis),* rice, sugar beets (e. g. C. *beticola),* sugar cane, vege- tables, coffee, soybeans (e. g. C. *sojina* or C. *kikuchit)* and rice; *Cladosporium* spp. on tomatoes (e. g. *C. fulvum:* leaf mold) and cereals, e. g. C. *herbarum* (black ear) on wheat; *Claviceps purpurea* (ergot) on cereals; *Cochliobolus* (anamorph: *He*/*minthosporium* of *Bipolaris*) spp. (leaf spots) on corn (C. *carbonum*), cereals (e. g. C. *sativus,* anamorph: *B. sorokiniana)* and rice (e. g. C. *miyabeanus,* anamorph: *H. orizae); Colle- totrichum* (teleomorph: *Glomerella)* spp. (anthracnose) on cotton (e. g. C. *gossypit),* corn (e. g. C. *graminicola:* Anthracnose stalk rot), soft fruits, potatoes (e. g. C. *coc-* codes: black dot), beans (e. g. C. *lindemuthianum)* and soybeans (e. g. C. *truncatum* or
   C. *gloeosporioides); Corticium* spp., e. g. C. *sasakii* (sheath blight) on rice; *Corynespora cassiicola* (leaf spots) on soybeans and ornamentals; *Cycloconium* spp., e. g. C. *oleaginum* on olive trees; *Cylindrocarpon* spp. (e. g. fruit tree canker or young vine de- cline, teleomorph: *Nectria* or *Neonectria* spp.) on fruit trees, vines (e. g. C. *liriodendri,* teleomorph: *Neonectria liriodendri:* Black Foot Disease) and ornamentals; *Dematophora* (teleomorph: *Rosellinia)* necatrix (root and stem rot) on soybeans; *Diaporthe* spp., e. g. *D. phaseolorum* (damping off) on soybeans; *Drechslera* (syn. *Helminthospo- rium*, teleomorph: *Pyrenophora)* spp. on corn, cereals, such as barley (e. g. *D*. *teres,* net blotch) and wheat (e. g. *D*. *triticirepentis:* tan spot), rice and turf; Esca (dieback, apoplexy) on vines, caused by *Formitiporia (syn. Phellinus) punctata, F. mediterranea*,
   *Phaeomoniella chlamydospora* (earlier *Phaeoacremonium chlamydosporum*), *Phaeoacremonium aleophilum* and/or *Botryosphaeria obtusa; Elsinoe* spp. on pome fruits *(E*. *pyn),* soft fruits *(E. veneta:* anthracnose) and vines *(E. ampelina:* anthrac- nose); *Entyloma oryzae* (leaf smut) on rice; *Epicoccum* spp. (black mold) on wheat; *Erysiphe* spp. (powdery mildew) on carrots, sugar beets *(E. betae),* vegetables (e. g. *E. pist),* such as cucurbits (e. g. *E. cichoracearum),* cabbages, rape (e. g. *E. crucife- rarum); Eutypa lata* (Eutypa canker or dieback, anamorph: *Cytosporina lata,* syn. *Liber- tella blepharis)* on fruit trees, vines and ornamental woods; *Exserohilum* (syn. *He*/*minthosporium*) spp. on corn (e. g. *E. turcieum); Fusarium* (teleomorph: *Gibberella)* spp. (wilt, root or stem rot) on various plants, such as *F. graminearum* or *F. culmorum* (root rot, scab or head blight) on cereals (e. g. wheat or barley), *F. oxysporum* on tomatoes, *F. so*/*ani* on soybeans and *F. verticillioides* on corn; *Gaeumannomyces graminis* (take-all) on cereals (e. g. wheat or barley) and corn; *Gibberella* spp. on cereals (e. g. G. *zeae)* and rice (e. g. *G. fujikuroi:* Bakanae disease); *Glomerella cingulata* on vines, pome fruits and other plants and G. *gossypii* on cotton; Grainstaining complex on rice; *Guignardia bidwellii* (black rot) on vines; *Gymnosporangium* spp. on rosaceous plants and junipers, e. g. G. *sabinae* (rust) on pears; *Helminthosporium* spp. (syn. *Drechslera,* teleomorph: *Cochliobolus)* on corn, cereals and rice; *Hemileia* spp., e. g. *H. vastatrix* (coffee leaf rust) on coffee; *lsnriopsis clavispora* (syn. *Cladosporium vitis)* on vines; *Leveillula taurica* on pepper, *Macrophomina phaseolina* (syn. *phaseolt)* (root and stem rot) on soybeans and cotton; *Microdochium* (syn. *Fusarium*) *nivale* (pink snow mold) on cereals (e. g. wheat or barley); *Microsphaera diffusa* (powdery mildew) on soybeans; *Monilinia* spp., e. g. *M. taxa, M. fructicola* and *M. fructigena* (bloom and twig blight, brown rot) on stone fruits and other rosaceous plants; *Mycosphaerella* spp. on cereals, bananas, soft fruits and ground nuts, such as e. g. *M. graminicola* (anamorph: *Septaria tritici,* Septaria blotch) on wheat or *M. fijiensis* (black Sigatoka disease) on bananas; *Peronospora* spp. (downy mildew) on cabbage (e. g. *P. brassicae),* rape (e. g. *P. parasitica),* onions (e. g. *P. destructor),* tobacco (P. *tabacina)* and soybeans (e. g. *P. manshurica*)*; Phakopsora pachyrhizi* and *P. meibomiae* (soybean rust) on soybeans; *Phialophora* spp. e. g. on vines (e. g. *P. tracheiphila* and *P. tetraspora)* and soybeans (e. g. *P. gregata:* stem rot); *Phoma lingam* (root and stem rot) on rape and cabbage and *P. betae* (root rot, leaf spot and damping-off) on sugar beets; *Phomopsis* spp. On sunflowers, vines (e. g. *P. viticola:* can and leaf spot) and soybeans (e. g. stem rot: *P. phaseoli,* teleomorph: *Diaporthe phaseolorum); Physoderma maydis* (brown spots) on corn; *Phytophthora* spp. (wilt, root, leaf, fruit and stem root) on various plants, such as paprika and cucurbits (e. g. *P. capsict),* soybeans (e. g. *P. megasperma,* syn. *P. sojae),* potatoes and tomatoes (e. g. *P. infestans:* late blight) and broad-leaved trees (e. g. *P. ramorum:* sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (P. *graminis)* and sugar beets (P. *betae)* and thereby transmitted viral diseases; *Pseudocercosporella herpotrichoides* (eyespot, teleomorph: *Tapesia yallundae)* on cereals, e. g. wheat or barley; *Pseudoperonospora* (downy mildew) on various plants, e. g. *P. cubensis* on cucurbits or *P. humili* on hop; *Pseudopezicula tracheiphila* (red fire disease or, rotbrenner' , anamorph: *Phialo- phora)* on vines; *Puccinia* spp. (rusts) on various plants, e. g. *P. triticina* (brown or leaf rust), *P. striiformis* (stripe or yellow rust), *P. hordei* (dwarf rust), *P*. *graminis* (stem or black rust) or *P. recondita* (brown or leaf rust) on cereals, such as e. g. wheat, barley or rye, and asparagus (e. g. *P. asparagt); Pyrenophora* (anamorph: *Drechslera*) *triticirepentis* (tan spot) on wheat or *P. teres* (net blotch) on barley; *Pyricularia* spp., *e.* g. *P. oryzae* (teleomorph: *Magnaporthe grisea,* rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P. aphanidermatum); Ramularia* spp., *e.* g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, *e.* g. *R. so*/*ani* (root and stem rot) on soybeans, *R. so*/*ani* (sheath blight) on rice or *R. cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and S. *attenuatum* (sheath rot) on rice; *Sclerotinia* spp. (stem rot or white mold) on vegetables and field crops, such as rape, bean, sunflowers (e. g. S. *sclerotiorum)* and soybeans (e. g. S. *rolfsii* or S. *sclerotiorum); Septaria* spp. on various plants, e. g. S. *glycines* (brown spot) on soybeans, S. *tritici* (Septaria blotch) on wheat and S. (syn. *Stagonospora)* nodorum (Stagonospora blotch) on cereals; *Uncinula* (syn. *Erysiphe) necator* (powdery mildew, anamorph: *Oidium tucken)* on vines; *Setospaeria* spp. (leaf blight) on corn (e. g. S. *turcicum,* syn. *Helminthosporium turcicum*) and turf; *Sphacelotheca* spp. (smut) on corn, (e. g. S. *reiliana:* head smut), sorghum und sugar cane; *Sphaerotheca fuligine* (powdery mildew) on cucurbits, cucumbers and melons; *Spongospora subterranea* (powdery scab) on potatoes and thereby transmitted viral diseases; *Stagonospora* spp. on cereals, *e*. g. S. *nodorum* (Stagonospora blotch, teleomorph: *Leptosphaeria* [syn. *Phaeosphaeria] nodorum)* on wheat; *Synchytrium endobioticum* on potatoes (potato wart disease); *Taphrina* spp., *e*. g. *T. deformans* (leaf curl disease) on peaches and *T. pruni* (plum pocket) on plums; *Thielaviopsis* spp. (black root rot) on tobacco, pome fruits, vegetables, soybeans and cotton, *e*. g. *T. basicola* (syn. *Chalara elegans); Tilletia* spp. (common bunt or stinking smut) on cereals, such as *e.* g. *T. tritici* (syn. *T. caries,* wheat bunt) and *T. controversa* (dwarf bunt) on wheat; *Typhula incarnata* (grey snow mold) on barley or wheat; *Urocystis* spp., *e.* g. *U. occulta* (stem smut) on rye; *Uromyces* spp. (rust) on vegetables, such as beans (e. g. *U. appendiculatus,* syn. *U. phaseolt)* and sugar beets (e. g. *U. betae); Ustilago* spp. (loose smut) on cereals (e. g. *U. nuda* and *U. avaenae*), corn (e. g. *U. maydis:* corn smut) and sugar cane; *Venturia* spp. (scab) on apples (e. g. *V. inaequalis)* and pears; and *Verticillium* spp. (wilt) on various plants, such as fruits and ornamentals, vines, soft fruits, vegetables and field crops, *e. g. V. dahliae* on strawberries, rape, potatoes and tomatoes.

Specifically, the method of the invention is used for controlling following plant pathogens:
- *Botrytis cinerea* (teleomorph: *Botryotinia fuckeliana:* grey mold) on fruits and berries (e. g. strawberries), vegetables (e. g. lettuce, carrots, celery and cabbages), rape, flowers, grapes (vines), forestry plants and wheat and especially on grapes
- *Bremia lactucae* (downy mildew) on lettuce
- *Uncinula* (syn. *Erysiphe) necator* (powdery mildew, anamorph: *Oidium tucken)* on grapes (vines)
- *Plasmopara* spp., *e.* g. *P. viticola* (grapevine downy mildew) on grapes (vines) and *P. halstedii* on sunflowers, especially *P. viticola* on grapes
- *Pseudoperonospora* (downy mildew) on various plants, *e.* g. *P. cubensis* on cucurbits or *P*. *humili* on hop, especially *P. cubensis* on cucurbits
- *Alternaria* spp. (Alternaria leaf spot) on vegetables, rape (A. *brassicola* or *brassicae),* cabbage (A. *brassicae),* sugar beets (A. *tenuis),* fruits, rice, soybeans, potatoes (e. g. *A. so*/*ani* or *A. alternata),* tomatoes (e. g. *A. so*/*ani* or *A. alternata),* carrots (A. *dauct)* and wheat, especially *A. so*/*ani* on tomatoes, *A. brassicae* on cabbage and *A. dauci* on carrots.
- *Venturia* spp. (scab) on apples (e. *g. V. inaequalis)* and pears, especially *V. inaequalis* on pomefruit, especially apple
- *Monilinia* spp., *e.* g. *M. taxa, M. fructicola* and *M fructigena* (bloom and twig blight, brown rot) on stone fruits and other rosaceous plants, especially *M. taxa* on stone fruit
- *Cercospora* spp. (Cercospora leaf spots) on corn (e.g. Gray leaf spot: C. *zeae maydis),* rice, sugar beets (e. g. C. *beticola),* sugar cane, vegetables, coffee, soybeans (e. g. C. *sojina* or C. *kikuchit)* and rice, especially C. *beticola* on sugar beets
- *Erysiphe* spp. (powdery mildew) on carrots or on sugar beets *(E. betae)*
- *Sphaerotheca fuliginea* (powdery mildew) on cucurbits, cucumber and melons
- *Leveillula taurica* on pepper
- *Sclerotinia* spp. (stem rot or white mold) on vegetables and field crops, such as rape, sunflowers, beans (e. g. S. *sclerotiorum)* and soybeans (e. g. S. *rolfsii* or S. *sclerotiorum),* especially S. *sclerotiorum* on beans.

The method according to the invention provides a good control of phytopathogenic fungi with no significant decline in the fungicidal effect as compared to the results obtained with the application of a synthetic fungicide alone. In many cases, the fungicidal effect of the method of the invention is comparable, in some cases even better than the effect of the synthetic fungicide alone. In some cases, the fungicidal effect is enhanced even overadditively (synergistically; synergism calculated according to Colby's formula) Advantageously, the residual amount of the synthetic fungicides in the harvested crops is significantly diminished as compared to plants which have been treated with the respective synthetic fungicide alone.

The invention will now be further illustrated by the following, non-limiting examples.

### Example A

### Activity of B. subtilis strain QST 713 in combination with fluopyram against Botrytis cinerea (Gray Mold) in tomatoes

Tomatoes were cultivated and grown under standard conditions with an adequate supply of water and nutrients. *Botrytis cinerea* was present in the field where the tomatoes were cultivated. On the dates compiled in Table 1 below, the plants' leaves were sprayed with aqueous formulations of the fungicidal agents. The commercial product, SERENADE®) MAX *(B. subtilis* strain QST 713), was applied at 250 grams per hectare per meter canopy height, and fluopyram was applied at 125 grams per hectare per meter canopy height. 10 days and 21 days after the last treatment, the extent of the development of the disease was determined visually. The results are compiled in Table 1 below. The percent disease control was determined by comparing the average disease rating of the untreated control group to the average disease rating for each treatment group.

**Table A**

| Treatment | Application code | Disease control [%] 10 DALT* | Disease control [%] 21 DALT* |
|---|---|---|---|
| Control | - | 0 | 0 |
| *B. subtilis* strain QST 713 | ABCD | 8 | 15 |
| Fluopyram | ABCD | 83 | 85 |
| Fluopyram | AB | 85 | 86 |
| *B. subtilis* strain QST 713 | CD | | |

| | | | |
|---|---|---|---|
| * DALT = Days after last treatment | | | |

### Application code:

| Application code | Application date | Growth stage |
|---|---|---|
| A | January 14 | 82 |
| B | January 22 | 83 |
| C | January 29 | 84 |
| D | February 9 | 86 |

### Example B

### Activity of B. subtilis strain QST 713 in combination with fluopyram against Sclerotinia sclerotiorum (White Mold) in beans

Beans were cultivated and grown under standard conditions with an adequate supply of water and nutrients. *Sclerotinia sclerotiorum* was present in the field where the beans were cultivated. On the dates compiled in Table 2 below, the plants' leaves were sprayed with aqueous formulations of the fungicidal agents. The commercial product, SERENADE® ASO (*B. subtilis* strain QST 713), was applied at 27.4 grams active ingredient per hectare, and fluopyram was applied at 150 grams active ingredient per hectare. 16 days and 37 days after the last treatment, the extent of the development of the disease was determined visually. The results are compiled in Table 2 below. The percent disease control was determined by comparing the average disease rating of the untreated control group to the average disease rating for each treatment group.

**Table B**

| Treatment | Application code | Disease control [%] 16 DALT* | Disease control [%] 37 DALT* |
|---|---|---|---|
| Control | - | 0 | 0 |
| *B. subtilis* strain QST 713 | ABCDEF | 48 | 42 |
| *B. subtilis* strain QST 713 | ACE | 51 | 24 |
| Fluopyram | AC | 78 | 76 |
| Fluopyram | A | 71 | 71 |
| *B. subtilis* strain QST 713 | CE | | |

| | | | |
|---|---|---|---|
| * DALT = Days after last treatment | | | |

### Application code:

| Application code | Application date | Growth stage |
|---|---|---|
| A | December 30 | 12 |
| B | January 4 | 14 |
| C | January 9 | 16 |
| D | January 14 | 17 |
| E | January 27 | 51 |
| F | February 1 | 60 |

## Claims

1. A method for controlling harmful fungi, which method comprises subjecting plants to be protected against fungal attack to two or more sequential treatment blocks, where at least one treatment block comprises subjecting the plants to
a. at least one treatment with at least one synthetic fungicide, which is fluopyram and
b. at least one treatment block comprises subjecting the plants to at least one treatment with at least one biological control agent, which is Bacillus firmus QST 713,
with the proviso that the last treatment block comprises subjecting the plants to at least one treatment with at least one biological control agent.

2. The method as claimed in claim 1, where the respective treatment blocks are carried out during different growth stages of the plants.

3. 3 method as claimed in claim 1, which comprises subjecting plants to be protected against fungal attack to two sequential treatment blocks, where the first treatment block comprises subjecting the plants to at least one treatment with at least one synthetic fungicide being fluopyram and the second, subsequent treatment block comprises subjecting the plants to at least one treatment with Bacillus subtilis QST 713.

4. The method as claimed in claim 1, where the first and the second treatment blocks are carried out during different growth stages of the plants.

5. 5 The method as claimed in any of the preceding claims, where the first treatment block ends latest when the plants have reached growth stage 81 and the last treatment block begins earliest when the plants are in growth stage 41, according to BBCH extended scale.

6. The method as claimed in claim 5, where the first treatment block ends latest when the plants have reached growth stage 79 and the last treatment block be- gins earliest when the plants are in growth stage 41, according to BBCH ex- tended scale.

7. The method as claimed in claim 6, where the first treatment block is carried out when the plants are in the growth stage 10 to 79 and the last treatment block is carried out when the plants are in the growth stage 41 to 92, according to BBCH extended scale.

8. The method as claimed in any of the preceding claims, where the plants are selected from grape, pome fruit, stone fruit, citrus fruit, banana, strawberry, blue- berry, almond, mango, papaya, cucurbit, pumpkin/squash, cucumber, melon, watermelon, kale, cabbage, Chinese cabbage, lettuce, endive, asparagus, carrot, celeriac, kohlrabi, chicory, radish, swede, scorzonerea, Brussels sprout, cauliflower, broccoli, onion, leek, garlic, shallot, tomato, potato, paprika, sugar beet, fodder beet, lentil, vegetable pea, fodder pea, bean, alfalfa (lucerne), soybeans, oilseed rape, mustard, sunflower, groundnut (peanut), maize (corn), wheat, triti-cale, rye, barley, oats, millet/sorghum, rice, cotton, flax, hemp, jute, spinach, sugar cane, tobacco and ornamental plants.

9. The method as claimed in claim 8, where the plants are selected from grape, pome fruit, stone fruit, cucurbit, melon, cabbage, tomato, paprika, sugar beet, bean, cucumber, lettuce and carrot.
